# EUROPÄISCHE PATENTSCHRIFT

(11) **EP 3 186 138 B1**
(45) Veröffentlichungstag und Bekanntmachung des Hinweises auf die Patenterteilung: **11.07.2018**
(21) Anmeldenummer: 15756391.7
(22) Anmeldetag: 25.08.2015
(51) Int. Cl.: B62K 27/00, B62J 6/00, B62B 7/12

(54) **FAHRRADANHÄNGER MIT INTEGRIERTER BELEUCHTUNG**
BICYCLE TRAILER WITH INTEGRATED LIGHTING
REMORQUE DE BICYCLETTE AVEC ÉCLAIRAGE INTÉGRÉ

(30) Priorität: 26.08.2014 DE 102014112248
(43) Veröffentlichungstag der Anmeldung: 05.07.2017
(73) Patentinhaber: Croozer GmbH, 50825 Köln (DE)
(72) Erfinder: SCHMITT, Fabien Yannick, London SE19 1QG (GB); COURT, Nigel Timothy, London SW16 6SW (GB); PLEVNIK, Marko, London NW3 2JR (GB); LACY, Graham Keith, London SW12 8LE (GB)
(74) Vertreter: Lenzing Gerber Stute
(86) Internationale Anmeldenummer: PCT/EP2015/069467
(87) Internationale Veröffentlichungsnummer: WO 2016/030388

(56) Entgegenhaltungen:
- CN-A- 102 219 040
- DE-A1- 10 330 184
- Burley: "Burley Kinderfahrradanhänger 2009 - CUO Betriebsanleitung & Sicherheitshinweise", , 15. Januar 2010 (2010-01-15), XP002744689, Gefunden im Internet: URL:http://burley.de/public/assets/2dcb89d a/Benutzerhandbuch_2009_Cub.pdf [gefunden am 2010-01-15]
- Anonymous: "Burley Cup 2013 Kinderanhänger o. Verdeck", fahrad.de , 20. April 2014 (2014-04-20), XP002744688, Gefunden im Internet: URL:https://web.archive.org/web/2014042012 4833/http://www.fahrrad.de/burley-cub-2013 -kinderanhaenger-352638.html? [gefunden am 2015-09-18]
- Anonym: "Sigma Micro Lampe, Beleuchtung für Kinderanhänger", bikebox-shop.de , 20. August 2013 (2013-08-20), XP002744690, Gefunden im Internet: URL:https://web.archive.org/web/2013101321 1805/https://www.bikebox-shop.de/kinderanh aenger-fahrradanhaenger/chariot-kinderanha enger-fahrradanhaenger/zubehoer-chariot/si gma-micro-lampe-beleuchtung-fuer-kinderanh aenger/a-237/ [gefunden am 2015-09-18]
- Anonym: "Sigma Micro Lampe Beleuchtung für Kinderanhänger", bikebox-shop.de , 20. August 2013 (2013-08-20), XP002744691, Gefunden im Internet: URL:https://www.bikebox-shop.de/kinderanha enger-fahrradanhaenger/chariot-kinderanhae nger-fahrradanhaenger/zubehoer-chariot/sig ma-micro-lampe-beleuchtung-fuer-kinderanha enger/a-237/ [gefunden am 2013-08-20]

## Beschreibung

Die vorliegende Erfindung betrifft einen Fahrradanhänger, insbesondere zum Transport von Kindern, mit einem Chassis und einem damit verbundenen Rahmengestell für eine Fahrgastzelle, der mindestens zwei Räder aufweist und der mit einer Deichsel zum Anhängen an ein Fahrrad sowie mit mindestens einem dritten Rad zur Nutzung des Fahrradanhängers als Kinderwagen oder Jogger versehen werden kann, der eine Beleuchtungseinrichtung aufweist und mit einem Schiebegriff versehen ist.

Multifunktions-Fahrradanhänger zum Transport von Kindern sind bekannt. Sie bieten in aller Regel die Möglichkeit, den Fahrradanhänger in seiner Hauptfunktion als Fahrradanhänger über eine Deichsel mit einem Zugfahrzeug, insbesondere einem Fahrrad, zu verbinden. Um einen Multifunktions-Fahrradanhänger als Kinderwagen oder als Jogger bzw. ganz allgemein als Schubfahrzeug zu verwenden, kann die Deichsel entweder abgenommen oder so am Fahrzeug eingeklappt werden, dass sie nicht mehr stört. Außerdem können neben den ohnehin vorhandenen zwei Rädern ein oder zwei zusätzliche Räder am Chassis befestigt werden, so dass das Fahrzeug eigenständig auf drei oder vier Rädern fahren kann. Der Multifunktions-Fahrradanhänger kann dann über einen Schiebegriff geschoben werden, der in der Regel als u-förmiger Bügel mit seitlichen, oberen Rahmenteilen des Rahmengestells verbunden ist. Das Rahmengestell ist in aller Regel so ausgebildet, dass die Fahrgastzelle auf ein kleines Maß über dem Chassis zusammenfaltbar ist, damit der Fahrradanhänger beispielsweise im Kofferraum eines Autos transportiert werden kann.

Es gibt unterschiedliche Ausführungen für die Schiebegriffe. In einer bekannten Ausführungsform ist der Schiebegriff als u-förmiger Bügel ausgebildet, wobei seine freien Enden in offene Rohrenden am oberen Rahmengestell einsteckbar und darin festlegbar sind (z.B. bei derzeitig angebotenen Kinderfahrradanhängern der Marke Croozer®). Bei anderen im Markt bekannten Multifunktions-Fahrradanhängern, beispielsweise von der Firma Burley, ist der Schiebegriff ebenso als u-förmiger Bügel ausgebildet, dessen freie Enden über ein Drehgelenk mit dem oberen Teil des Rahmengestells so verbunden sind, dass der Bügel zum Schieben in eine Position hinter der Fahrgastzelle und für den Fall, dass er nicht benötigt wird, in eine Position auf der Fahrgastzelle gebracht und in der jeweiligen Position festgestellt werden kann. In einer weiteren vorbekannten Ausführungsform ist der Schiebebügel mit Klemmeinrichtungen an im Wesentlichen senkrechten oder waagerechten Rahmenteilen der Fahrgastzelle des Fahrradanhängers angebracht.

Für die Multifunktions-Fahrradanhänger von Burley, auf die der Oberbegriff von Anspruch 1 basiert, wird eine batteriebetriebene Lampe angeboten, die auf einen Befestigungsadapter an einer oberen, querverlaufenden Stange des Rahmengestells aufgesteckt werden kann (siehe https://web.archive.org/web/20140420124833/http://www.fahrrad.de/burley-cub-2013-kinderanhaenger-352638.html). Die Fahrgastzellenhaut weist an der Stelle des Adapters hierfür eine Öffnung auf. Die Lampe hat ein weißes Front- und ein rotes Rücklicht. Zwar ist die Lampe in aufgestecktem Zustand gut sichtbar, allerdings erhöht sie den Luftwiderstand des Fahrradanhängers und ist beim Zusammenfalten der Fahrgastzelle störend. Außerdem ist sie beim Zusammenfalten der Fahrgastzelle stoßgefährdet. Wird die Lampe von der Fahrgastzelle abgenommen, muss sie als getrenntes kleines Bauteil mitgeführt werden und kann leicht verloren gehen. All dies erschwert die Handhabung der Lampe.

Um die Betriebssicherheit von Fahrradanhängern zu erhöhen, ist unter anderem aus der DE 20 2004 014 717 U1 bekannt, den Fahrradanhänger mit einer Wimpelstange auszustatten, an deren Spitze eine Leuchte angeordnet ist. Wimpelstangen haben aber grundsätzlich den Nachteil, dass sie sperrig sind und meist eine gewisse Elastizität aufweisen, weshalb sie während der Fahrt hin und her schwenken und dadurch andere Verkehrsteilnehmer, insbesondere Fußgänger, gefährden können. Dies gilt umso mehr, wenn am oberen Ende der Wimpelstange ein Gewicht wie das einer Leuchte angebracht ist.

Des Weiteren sind an einem Rundrohr befestigbare Lampen für Fahrräder oder für Kinderanhänger bekannt. Diese können z.B. mit Klemmvorrichtungen oder Klettverschlüssen ausgeführt sein (siehe https://web.archive.org/web/20131013211805/https://www.bikebox-shop.de/kinderanhaenger-fahrradanhaenger/chariot-kinderanhaengerfahrradanhaenger/zubehoer-chariot/sigma-micro-lampe-beleuchtung-fuer-Kinderanhaenger/a-237/). Ebenso wie bei dem oben genannten Produkt der Firma Burley entsteht durch diese Lampen der Nachteil eines erhöhten Luftwiderstandes sowie eine Störung beim Zusammenfalten der Fahrgastzelle.

Demgegenüber besteht eine Aufgabe der vorliegenden Erfindung darin, einen Fahrradanhänger mit einer Beleuchtungseinrichtung bereitzustellen, bei dem die Handhabung der Beleuchtungseinrichtung vereinfacht ist.

Diese Aufgabe wird mit einem Fahrradanhänger der eingangs genannten Art mit den Merkmalen des Anspruchs 1 dadurch gelöst, dass mindestens eine Beleuchtungseinrichtung in den Schiebegriff oder in eine Kupplung zur Befestigung des Schiebegriffs am Rahmengestell integriert ist.

Der Grundgedanke der Erfindung besteht demnach darin, die Beleuchtungseinrichtung in den Schiebegriff oder die Kupplung zu seiner Befestigung zu integrieren.

Unter einem Schiebegriff wird hier und im Folgenden nicht nur ein im Wesentlichen u-förmiger Bügel verstanden. Die Erfindung ist auch auf Multifunktionsanhänger anwendbar, bei denen ein rechter und ein linker Schiebegriff als getrennte Bauteile vorgesehen sind.

Unter Integrieren wird hier und im Folgenden verstanden, dass das Gehäuse der Beleuchtungseinrichtung zumindest teilweise in den Schiebegriff oder in eine Kupplung zur Befestigung des Schiebegriffs am Rahmengestell eingelassen ist und/oder zumindest so teilweise unmittelbar am Schiebegriff anliegt und diesen zumindest teilweise umschließt, dass die Beleuchtungseinrichtung formschlüssig und lagefest am Schiebegriff befestigt ist. Unter lagefest wird hier verstanden, dass die Position und der Abstrahlwinkel der Beleuchtungseinrichtung relativ zum Schiebegriff klar definiert und unveränderbar ist.

Als Leuchtmittel für die Beleuchtungseinrichtung kommen insbesondere Leuchtdioden, aber naturgemäß auch Glühbirnen in Betracht.

Durch die Integration der Beleuchtungsmittel als Bestandteil des Schiebegriffs oder der Kupplung zur Befestigung des Schiebegriffs wird die Handhabung zunächst dadurch vereinfacht, dass die Beleuchtungseinrichtung kein zusätzliches Anbauteil an den Multifunktions-Fahrradanhänger mehr ist, sondern Bestandteil eines Funktionsbauteils, das nicht unmittelbarer Bestandteil der Fahrgastzelle ist. Dadurch wird eine Anordnung der Beleuchtungseinrichtung am Multifunktions-Fahrradanhänger möglich, bei der die Beleuchtungseinrichtung beim Zusammenfalten der Fahrgastzelle nicht mehr stört und eine Stoßgefährdung zumindest verringert ist.

Unabhängig davon ist die Beleuchtungseinrichtung in Höhe des Schiebegriffs, also oben am Multifunktionsanhänger angeordnet und damit grundsätzlich gut sichtbar. Des Weiteren ist es nicht notwendig, in der Fahrgastzellenhaut eine Öffnung zur Befestigung der Beleuchtungseinrichtung vorzusehen. Somit kann eine mechanische Schwachstelle in der Fahrgastzellenaußenhaut vermieden werden, und es werden Undichtigkeiten vermieden.

Schließlich kann die Beleuchtungseinrichtung wegen der lagefesten Positionierung nicht verrutschen, so dass der Abstrahlwinkel der Beleuchtungseinrichtung immer eindeutig definiert ist.

Ist die Beleuchtungseinrichtung in einen abnehmbaren Schiebegriff integriert, dann können die Beleuchtungsmittel vom Multifunktions-Fahrradanhänger zusammen mit dem Schiebegriff abgenommen werden. Da der Schiebegriff deutlich größer als eine Lampe ist, gehen die Beleuchtungsmittel nicht so schnell verloren, zumal sie kein zusätzliches Bauteil des Multifunktions-Fahrradanhängers sind.

Ist der Schiebegriff als Bügel ausgebildet, kann sich die Beleuchtungseinrichtung vergleichsweise lang in Längsrichtung des Bügels erstrecken, gegebenenfalls sogar über seine gesamte Länge. Leuchtflächen mit Längen von 15 oder 25 cm oder noch deutlich mehr sind ohne weiteres realisierbar. Hierfür kann der Schiebegriff beispielsweise an einer Seite seines Profils eine Ausnehmung aufweisen, in die ein Teil des Gehäuses der Beleuchtungseinrichtung eingesetzt ist und in der das Gehäuseteil gehalten wird, beispielsweise durch eine Verschraubung oder einen einfachen Rastmechanismus, der bei Bedarf auch als lösbarer Rastmechanismus ausgestaltet sein kann.

Bei dem als Bügel ausgebildeten Schiebegriff kann die Beleuchtungseinrichtung an dem mittleren, in Fahrtrichtung hinteren Teil des Bügels angeordnet sein. Es ist dabei möglich, die Beleuchtungseinrichtung entlang des Bügels auszubilden, um die Sichtbarkeit zu erhöhen.

In einer vorteilhaften Ausgestaltung ist an jedem freien Schenkel eines u-förmigen Schiebebügels mindestens eine Beleuchtungseinrichtung vorgesehen. Dabei ist es darüber hinaus von Vorteil, wenn die Beleuchtungseinrichtung das Profil des Schiebegriffs vollständig umgreift und/oder zumindest teilweise über den Profilquerschnitt des Schiebegriffs hinausragt. Durch die seitliche Anordnung kann mit den Beleuchtungsmitteln im Dunkeln die Breite der Fahrgastzelle markiert werden, insbesondere dann, wenn die Beleuchtungseinrichtung zumindest teilweise seitlich nach außen über das Profil des Schiebegriffs übersteht.

Die Beleuchtungseinrichtung kann auch um die Ecken des Schiebebügels herum verlaufen. Dies hat den Vorteil, dass mit zwei Beleuchtungsmitteln sowohl eine seitliche als auch eine rückwärtige Beleuchtung des Fahrradanhängers möglich ist, was die Sichtbarkeit von den Seiten und von hinten erhöht, wobei gleichzeitig die Breite der Fahrgastzelle markiert wird.

Umgreift das Gehäuse der Beleuchtungseinrichtung das Profil des Schiebegriffs, kann der Formschluss beispielsweise dadurch erzeugt werden, dass im Gehäuse Positionsstifte vorgesehen sind, die in hierfür vorgesehene Löcher im Profil des Schiebegriffs eingreifen. Auch kann das Gehäuse am Schiebegriff festgeschraubt sein.

Alternativ kann eine lagefeste Positionierung beispielsweise auch derart erfolgen, dass der Schiebegriff zumindest im Bereich der Position der Beleuchtungseinrichtung ein nicht kreisrundes Querschnittsprofil aufweist und das Gehäuse, beispielsweise in Form zweier Gehäuseschalen, Anlageflächen aufweist, die der Form des nicht kreisrunden Querschnittsprofils entsprechen. Des Weiteren können am Schiebegriff Querschnittserweiterungen vorgesehen sein, die die Position der Beleuchtungseinrichtung festlegen. Alternativ reicht es aus, wenn beispielsweise eine zumindest teilweise umlaufende Nut außen in den Schiebegriff eingelassen ist, in die ein im Inneren des Gehäuses vorgesehener Steg eingreift.

Der transluzente Teil des Beleuchtungsmittels (Streuscheibe) kann als Leuchtfläche nahezu vollständig oder vollständig um den Profilquerschnitt herumgeführt sein, so dass die Sichtbarkeit der Beleuchtungseinrichtung weiter verbessert ist. Dies gilt nicht nur dann, wenn das Gehäuse der Beleuchtungseinrichtung den Schiebegriff umgreift, sondern auch dann, wenn ein Teil des Gehäuses in das Profil des Schiebegriffs eingesetzt ist. In beiden Fällen ist es nicht zwingend notwendig, dass die Leuchtfläche des Leuchtmittels vollständig von dem Leuchtmittel der Beleuchtungseinrichtung ausgeleuchtet wird. Es können Teile der Leuchtfläche oder sogar die gesamte Leuchtfläche als Lichtleiter ausgebildet sein, in den an einer oder mehreren Stellen Licht eingekoppelt wird und aus dem das Licht im Wesentlichen gleichmäßig über die Fläche verteilt austritt.

Das Gehäuse der Beleuchtungseinrichtung kann auch als Griffstück dienen, beispielsweise nahe der freien Enden eines abnehmbaren Schiebebügels, um die Handhabung des Bügels beim Befestigen am Fahrradanhänger zu vereinfachen. Hierfür kann die Beleuchtungseinrichtung teilweise mit einem Weichschaum- oder einem Silikonmaterial ummantelt sein, das, wenn es sich auch über die Leuchtflächen der Beleuchtungseinrichtung erstreckt, zumindest dort transluzent ist.

Das Gehäuse der Beleuchtungseinrichtung kann auch derart ausgestaltet sein, dass darin ein das Leuchtmittel und gegebenenfalls auch eine Stromquelle (z.B. Batterie) enthaltender Teil lösbar einsetzbar ist, wobei die Leuchte und das Gehäuse über einen Schnellverschluss, beispielsweise einen lösbaren Rastmechanismus, miteinander verbunden sind.

In einer weiteren bevorzugten Ausgestaltung der Erfindung sind Beleuchtungseinrichtungen in die Außenseiten von feststellbaren Drehgelenken integriert, die wahlweise in den zwei freien Schenkeln eines Schiebebügels sitzen oder als Kupplung zur Befestigung des Schiebegriffs am Rahmengestell dienen. Vorzugsweise sind die Beleuchtungseinrichtungen dabei am feststehenden Teil des Drehgelenks befestigt, so dass die Lage der Beleuchtungseinrichtung in Bezug zum Fahrradanhänger fest ist.

Die Beleuchtungseinrichtung kann in einfacher Weise über eine Batterie oder einen Akku mit Strom versorgt werden. Für die Batterie kann beispielsweise eine Aufnahme vorgesehen sein, die in einem Gehäuseteil sitzt, das in eine Ausnahme im Profil, vorzugsweise Hohlprofil, des Schiebegriffs oder in die als feststellbares Drehgelenk ausgebildete Kupplung eingelassen ist. Das Gehäuse kann dann zum Beispiel über eine von außen zugängliche Rastnase in der Ausnehmung lösbar verrastet werden, so dass es zum Auswechseln der Batterie aus der Ausnehmung herausgenommen werden kann.

In einer konstruktiv aufwändigeren, aber für den Nutzer komfortableren Lösung sind innerhalb des Rahmengestells oder am Rahmengestell Stromführungen zum Verbinden der Beleuchtungseinrichtung(en) mit einer Stromquelle vorgesehen. Sitzen die eine oder die mehreren Beleuchtungseinrichtungen im Schiebegriff, werden diese über am oder im Profil des Schiebegriffs verlaufende Stromleiter mit Energie versorgt, die mit den Stromführungen innerhalb des Rahmengestells gekoppelt werden. Insbesondere im Falle einer Steckkupplung zum Ein- oder Aufstecken des Schiebegriffs in oder auf Aufnahmen am Rahmengestell ist hierfür bevorzugt eine Kontaktierungseinrichtung in der Kupplung vorgesehen, über die die am oder im Profil des Schiebegriffs verlaufenden Stromleiter mit korrespondierenden Stromleitern im Rahmengestell elektrisch verbindbar sind.

Die Beleuchtungseinrichtung gibt vorzugsweise nach in Fahrtrichtung vorn und hinten Licht in unterschiedlichen Farben ab. Dies kann bei einem Leuchtmittel je Beleuchtungseinrichtung dadurch erreicht werden, dass die Beleuchtungsmittel im in Fahrtrichtung vorderen Teil eine in einer Farbe eingefärbte transluzente oder eine durchsichtige Kappe und im in Fahrtrichtung hinteren Teil eine anders eingefärbte transluzente, beispielsweise rot eingefärbte Kappe hat. Jedes Beleuchtungsmittel kann aber auch einen nach vorn und einen nach hinten abstrahlenden Teil aufweisen, der beispielsweise mit unterschiedlich farbigen Leuchtmitteln bestückt ist. Als Leuchtmittel kommen insbesondere LED-Leuchtmittel in Betracht. Werden Vielfarb-LEDs als Leuchtmittel eingesetzt, wäre es möglich, die abgestrahlte Farbe je nach Bedarf zu ändern. So lässt sich damit auf einfache Weise ein gelbes Blinklicht zur Anzeige eines Richtungswechsels erzeugen.

Als Stromquelle für die Beleuchtungseinrichtung kommt zum einen eine eigene Stromquelle, insbesondere eine oder mehrere Batterien oder Akkus, in Betracht. Batterien oder Akkus können vorzugsweise im Gehäuse der Beleuchtungseinrichtung aufgenommen sein, aber auch außerhalb des Gehäuses am Schiebegriff oder am Fahrradanhänger, gegebenenfalls in einem hierfür vorgesehenen Gehäuse. Werden Akkus als Stromquelle verwendet, kann die Beleuchtungseinrichtung eine Ladebuchse aufweisen, beispielsweise einen genormten Mini-USB-Anschluss. Auch können eine oder mehrere Solarzellen zum Aufladen von Akkus an der Beleuchtungseinrichtung oder am Fahrradanhänger bzw. Schiebegriff vorgesehen sein. Werden mehrere Beleuchtungseinrichtungen am Fahrradanhänger eingesetzt, reicht es aus, wenn eine der Beleuchtungseinrichtungen eine eigene Stromquelle aufweist und die anderen Strom aus dieser einen Stromquelle beziehen, indem sie damit verdrahtet sind. Auch können mehrere Beleuchtungseinrichtungen so miteinander verdrahtet sein, dass eine Ladebuchse an einer Beleuchtungseinrichtung auch den Akku oder die Akkus der anderen Beleuchtungseinrichtung(en) speist.

Alternativ oder in Ergänzung zu einer eigenen Stromquelle kommen auch externe Stromquellen zur Energieversorgung der Beleuchtungseinrichtung(en) in Betracht, wie beispielsweise ein Generator am Fahrradanhänger, beispielsweise ein Felgengenerator oder ein Nabengenerator, oder eine Stromversorgung über das ziehende Fahrrad (z.B. Dynamo) oder E-Bike.

Noch eine weitere bevorzugte Ausgestaltung der Erfindung ist gekennzeichnet durch eine drahtlos mit der Beleuchtungseinrichtung verbundene Betätigungseinrichtung zum Steuern des Betriebs der Beleuchtungseinrichtung. Als Betätigungseinrichtung kommt beispielsweise eine am Lenker eines Fahrrads montierbare Funkfernbedienung in Betracht, mit der die Beleuchtungseinrichtung(en) ein- und ausgeschaltet werden können und gegebenenfalls auch weitere Beleuchtungsmodi, beispielsweise rechtes oder linkes Blinken oder auch Warnblinken, ein- und ausgeschaltet werden können.

In ähnlicher Weise wird die oben genannte Aufgabe mit einem Fahrradanhänger der eingangs genannten Art gelöst, bei dem zumindest ein Teil der Beleuchtungseinrichtung seitlich außen an einem Teil des Fahrradanhängers angeordnet ist und die Beleuchtungseinrichtung insbesondere an einer Außenseite eines seitlichen Rahmenteils befestigt oder in diesen integriert ist. Auf diese Weise ist es möglich, die maximale Breite der Fahrgastzelle im Dunkeln deutlich zu markieren.

Im Folgenden werden verschiedene Aspekte der Erfindung anhand von Figuren erläutert. Es zeigen:
- Fig. 1: eine vereinfachte Ansicht eines Multifunktions-Fahrradanhängers;
- Fig. 2: eine in das Drehgelenk zum Befestigen des Schiebebügels am Fahrradanhänger der Figur 1 integrierte Beleuchtungseinrichtung;
- Fig. 3: eine vereinfachte Ansicht eines anderen Multifunktions-Fahrradanhängers; und
- Fig. 4: einen erfindungsgemäßen Schiebebügel mit verschiedenen Beispielen von darin integrierten Beleuchtungseinrichtungen.

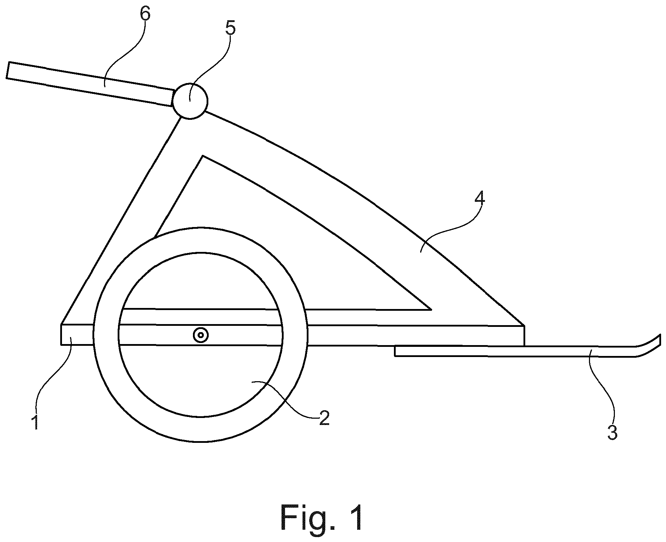

Der in Figur 1 vereinfacht dargestellte Multifunktions-Fahrradanhänger weist ein Chassis 1 auf, an dem die Räder 2 aufgehängt und die Deichsel 3 befestigt sind und das die Fahrgastzelle trägt, die unter anderem durch ein Rahmengestell und eine dadurch aufgespannte Außenhaut 4 gebildet wird. Oben am Rahmengestell ist ein feststellbares Drehgelenk 5 befestigt, an dem ein Schiebegriff 6 angelenkt ist.

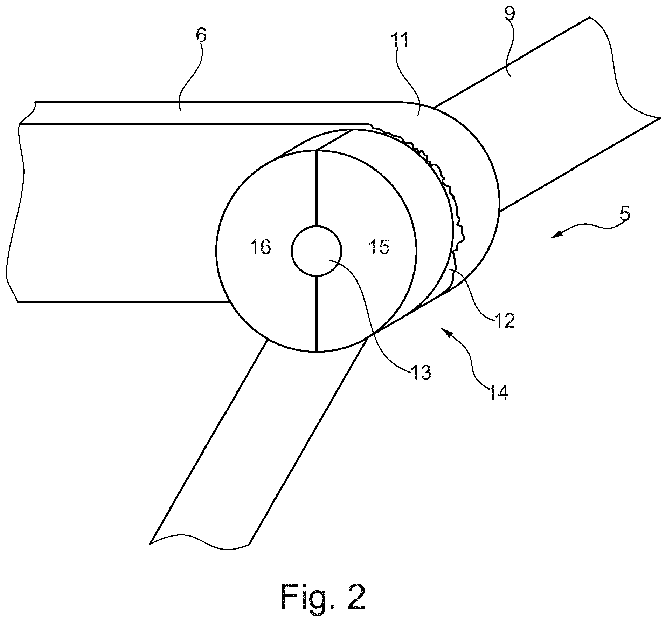

Figur 2 zeigt eine beispielhafte erfindungsgemäße Ausführungsform eines am Drehgelenk 5 ausgebildeten Beleuchtungsmittels. Das Drehgelenk 5 weist einen drehbaren Teil 11, an dem der Schiebegriff 6 befestigt ist, sowie einen fest stehenden Teil 12 auf. Der fest stehende Teil 12 ist mit einem quer verlaufenden Rohr 9 des Rahmengestells fest verbunden. Die Teile 11, 12 werden über einen innen liegenden Federmechanismus gegeneinander gepresst, so dass die beiden Teile aufgrund von einer Zahnstruktur an den einander zugewandten Stirnseiten der beiden Teile zueinander festgelegt sind. Der Eingriff der Teile 11, 12 ineinander kann durch Betätigen eines Druckknopfes 13 gelöst werden. In den festen Teil 12 des Drehgelenks ist eine Beleuchtungseinrichtung 14 integriert. Dabei wird die äußere Kappe des festen Teils 12 durch eine transluzente Abdeckung mit einem weißen vorderen Teil 15 und einem roten hinteren Teil 16 gebildet, die sowohl ein seitliches Abstrahlen, als auch ein radiales Abstrahlen von Licht ermöglicht. Hinter der transluzenten Abdeckung sitzen ein hier nicht dargestelltes Leuchtmittel sowie ein Reflektor.

Ein solches Beleuchtungsmittel ist sinnvollerweise in die Drehgelenke zu beiden Seiten des Fahrradanhängers integriert. In einer nicht dargestellten konstruktiven Alternative kann die transluzente Abdeckung auch über den kreisförmigen Querschnitt des Drehgelenks, beispielsweise nach oben, beispielsweise stabförmig, überstehen, so dass die Abstrahlfläche vergrößert ist.

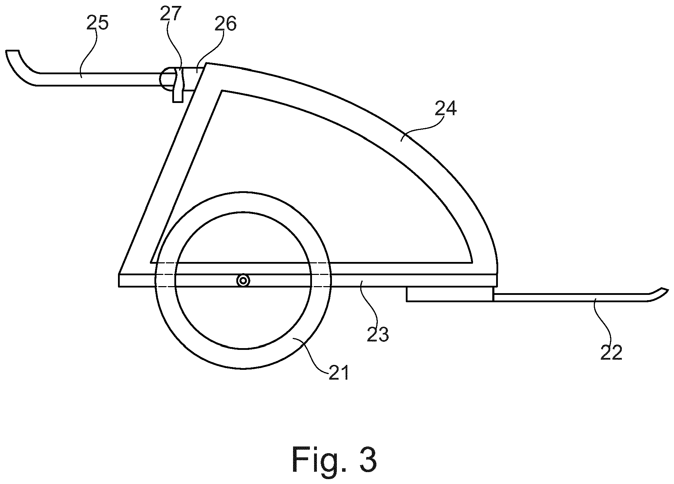

Figur 3 zeigt einen ähnlichen Fahrradanhänger mit einem Chassis 23, das die Räder 21, die Deichsel 22 sowie die Fahrgastzelle trägt. Die Fahrgastzelle wird unter anderem durch ein Rahmengestell und eine dadurch aufgespannte Außenhaut 24 gebildet.

Im Gegensatz zum Fahrradanhänger der Figur 1 ist der Schiebegriff 25 hier in rohrförmige Aufnahmen 26 eingesetzt und darin beispielsweise mit einem Sicherungsbolzen 27 arretiert.

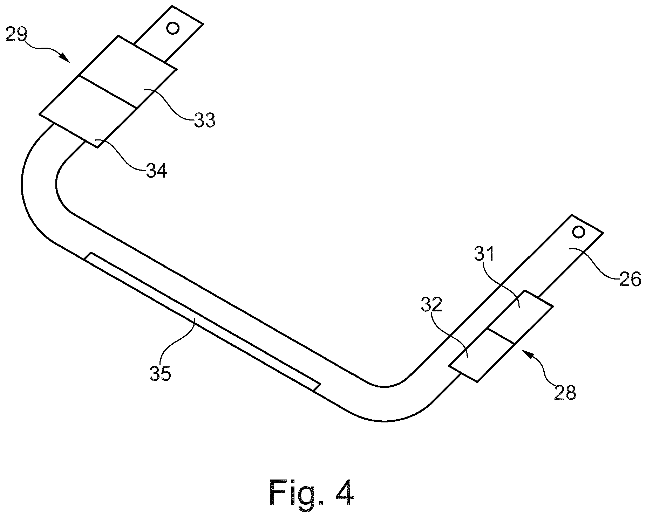

Figur 4 zeigt verschiedene Möglichkeiten der Integration eines erfindungsgemäßen Beleuchtungsmittels in den Schiebegriff 25 des in Figur 3 dargestellten Fahrradanhängers. Naturgemäß kann eine derartige Integration der Beleuchtungsmittel auch im Schiebegriff 6 des Fahrradanhängers der Figur 1 erfolgen.

Der u-förmige Schiebegriff weist in den seitlichen Schenkeln jeweils ein Beleuchtungsmittel 28, 29 auf. Das Beleuchtungsmittel kann dabei, wie im Beispiel des Beleuchtungsmittels 28, von der Außenseite in eine Ausnehmung des Profils des Schiebegriffs eingesetzt sein und seitlich aus dem Profil herausstehen. Alternativ hierzu kann das Beleuchtungsmittel, wie beim Beleuchtungsmittel 29 gezeigt, das Profil des Schiebegriffs vollständig oder zumindest nahezu vollständig umgreifen. Hierfür kann der transluzente, lichtabgebende Teil des Beleuchtungsmittels ein entsprechend angepasstes Profil aufweisen, das entweder axial auf die freien Schenkel des u-förmigen Schiebegriffs aufgeschoben wird oder, bei einem teilweisen Umgreifen des Leuchtmittels, auf das Profil des Schiebegriffs aufgeclipt werden. Auch hier kann ein Teil des Leuchtmittels, beispielsweise ein Batteriegehäuse, in eine Ausnehmung des Profils des Schiebegriffs eingelassen sein.

Eine Dritte Möglichkeit besteht darin, die Beleuchtungseinrichtung 35 am hinteren Teil des Schiebegriffs so anzuordnen, dass sie nach hinten abstrahlt. Dort reicht es aus, wenn die Streuscheibe der Leuchte einfarbig rot ausgebildet ist. Steht die Beleuchtungseinrichtung aus dem Profil des Schiebegriffs heraus, kann die Beleuchtungseinrichtung auch seitlich abstrahlen. Wie bereits oben erwähnt, hier aber nicht dargestellt, besteht eine vierte Möglichkeit darin, die Beleuchtungseinrichtung um die Ecken des Schiebegriffs herum zu führen, so dass auch bei dieser Ausführungsform nach hinten und zur Seite abgestrahlt wird.

## Patentansprüche

1. Fahrradanhänger, insbesondere zum Transport von Kindern, mit einem Chassis (1/23) und einem damit verbundenen Rahmengestell für eine Fahrgastzelle, der mindestens zwei Räder (2/21) aufweist und der mit einer Deichsel (3/22) zum Anhängen an ein Fahrrad und mit mindestens einem dritten Rad zur Nutzung des Fahrradanhängers als Kinderwagen oder Jogger versehen werden kann, der eine Beleuchtungseinrichtung (14/35) aufweist und mit einem Schiebegriff (6/25) versehen ist, **dadurch gekennzeichnet, dass** mindestens eine Beleuchtungseinrichtung (14/28/29/35) in den Schiebegriff (6/25) oder in eine Kupplung zur Befestigung des Schiebegriffs (6/25) am Rahmengestell integriert ist.

2. Fahrradanhänger nach Anspruch 1, **dadurch gekennzeichnet, dass** der Schiebegriff (25) als im Wesentlichen u-förmiger Bügel ausgebildet ist und
- an seinem die beiden freien Schenkel verbindenden, zur Fahrtrichtung quer verlaufenden Teil des Bügels mindestens eine Beleuchtungseinrichtung (35) vorgesehen ist, und/oder
- an jedem freien Schenkel des Bügels mindestens eine Beleuchtungseinrichtung (28/29) vorgesehen ist, und/oder
- eine Beleuchtungseinrichtung oder jeweils eine Beleuchtungseinrichtung um die hinteren Ecken des Bügels herumgezogen ist

3. Fahrradanhänger nach Anspruch 2, **dadurch gekennzeichnet, dass** das Gehäuse der Beleuchtungseinrichtung (29) den Schiebegriff (25) umgreift und/oder die Beleuchtungseinrichtung (28/29) zumindest teilweise über den Profilquerschnitt des Schiebegriffs (25) hinausragt.

4. Fahrradanhänger nach einem der Ansprüche 2 oder 3, **dadurch gekennzeichnet, dass** ein Teil des Gehäuses der Beleuchtungseinrichtung (28/29/35) in eine oder mehrere Ausnehmungen im Profil des Schiebegriffs (25) eingesetzt ist.

5. Fahrradanhänger nach einem der Ansprüche 2 bis 4, **dadurch gekennzeichnet, dass** die Beleuchtungseinrichtung (28/29/35) eine Länge von mindestens 10 cm, vorzugsweise von mehr als 15 cm aufweist.

6. Fahrradanhänger nach einem der vorstehenden Ansprüche, **dadurch gekennzeichnet, dass** die Beleuchtungseinrichtung (14/28/29/35) teilweise oder ganz mit einem Weichschaum- oder Silikonmaterial ummantelt ist.

7. Fahrradanhänger nach einem der vorstehenden Ansprüche, **dadurch gekennzeichnet, dass** die Beleuchtungseinrichtung (14/28/29/35) einen das Leuchtmittel und gegebenenfalls auch eine Stromquelle enthaltenden Teil aufweist, der lösbar in das Gehäuse der Beleuchtungseinrichtung (14/28/29/35) einsetzbar ist.

8. Fahrradanhänger nach einem der vorstehenden Ansprüche, **dadurch gekennzeichnet, dass** der Schiebegriff (6) über mindestens eine als feststellbares Drehgelenk (5) ausgebildete Kupplung, insbesondere über zwei feststellbare Drehgelenke (5), am Rahmengestell befestigt ist und/oder mindestens ein feststellbares Drehgelenk (5), insbesondere zwei Drehgelenke (5), aufweist, und dass die Beleuchtungseinrichtung (14) in das Drehgelenk (5) eingesetzt ist, wobei sie insbesondere mit einem feststehenden Teil des Drehgelenks (5) fest verbunden ist.

9. Fahrradanhänger nach einem der vorstehenden Ansprüche, **dadurch gekennzeichnet, dass** die Beleuchtungseinrichtung (14/28/29/35) innerhalb ihres Gehäuses eine Aufnahme für eine Batterie oder einen Akku aufweist, und/oder **gekennzeichnet durch** Stromführungen innerhalb des Rahmengestells zum Verbinden der Beleuchtungseinrichtung(en) (14/28/29/35) mit einer Stromquelle.

10. Fahrradanhänger nach einem der vorstehenden Ansprüche, **dadurch gekennzeichnet, dass** der oder die Beleuchtungseinrichtung(en) (14/28/29/35) über am oder im Profil des Schiebegriffs (6/25) verlaufende Stromleiter mit Energie versorgt werden.

11. Fahrradanhänger nach Anspruch 10, **dadurch gekennzeichnet, dass** in der Kupplung eine Kontaktierungseinrichtung vorgesehen ist, über die die am oder im Profil des Schiebegriffs (6/25) verlaufenden Stromleiter mit korrespondierenden Stromleitern im Rahmengestell elektrisch verbindbar sind, wobei die Kupplung insbesondere eine Steckkupplung zum Ein- oder Aufstecken des Schiebegriffs (6/25) in oder auf Aufnahmen am Rahmengestell ist.

12. Fahrradanhänger nach einem der vorstehenden Ansprüche, **dadurch gekennzeichnet, dass** der Schiebegriff in seinen zwei freien Schenkeln jeweils ein feststellbares Drehgelenk aufweist oder die Kupplung zur Befestigung des Schiebegriffs am Rahmengestell als Drehgelenk ausgebildet ist, und dass die Beleuchtungseinrichtung in das Drehgelenk integriert ist.

13. Fahrradanhänger nach einem der vorstehenden Ansprüche, **dadurch gekennzeichnet, dass** die Beleuchtungseinrichtung (14/28/29) nach in Fahrtrichtung vorn und hinten Licht in unterschiedlichen Farben abgibt.

14. Fahrradanhänger nach einem der vorstehenden Ansprüche, **gekennzeichnet durch** einen mit der Beleuchtungseinrichtung (14/28/29/35) verbundenen Generator und/oder durch einen Akku, der insbesondere durch am Fahrradanhänger, dem Schiebegriff (6/25) oder der Beleuchtungseinrichtung (14/28/29/35) angeordnete Solarzellen aufladbar ist.

15. Fahrradanhänger nach einem der vorstehenden Ansprüche, **gekennzeichnet durch** eine drahtlos mit der Beleuchtungseinrichtung (14/28/29/35) verbundene Betätigungseinrichtung zum Steuern des Betriebs der Beleuchtungseinrichtung (14/28/29/35).

## Claims

1. A bicycle trailer, in particular for transporting children, having a chassis (1/23) and an associated frame for a passenger compartment, which comprises at least two wheels (2/21) and is configured to be provided with a towbar (3/22) for attachment to a bicycle and with at least a third wheel for using the bicycle trailer as a stroller or jogger, having a lighting device (14/35) and a push handle (6/25), **characterized in that** at least one lighting device (14/28/29/35) is integrated into the push handle (6/25) or into a coupling for attaching the push handle (6/25) to the frame.

2. A bicycle trailer according to claim 1, **characterized in that** the push handle (25) is configured as a substantially u-shaped bar and
- at least one lighting device (35) is provided on the section of the bar running transverse to the direction of travel connecting the two free arms thereof, and/or
- at least one lighting device (28/29) is provided on each free arm of the bar, and/or
- one lighting device or a lighting device in each case is drawn around rear corners of the bar

3. A bicycle trailer according to claim 2, **characterized in that** the housing of the lighting device (29) surrounds the push handle (25) and/or the lighting device (28/29) protrudes at least partially over a profile cross-section of the push handle (25).

4. A bicycle trailer according to any of the claims 2 or 3, **characterized in that** a section of the housing of the lighting device (28/29/35) is inserted into one or more recesses in a profile of the push handle (25).

5. A bicycle trailer according to any of the claims 2 to 4, **characterized in that** the lighting device (28/29/35) has a length of at least 10 cm, in particular of more than 15 cm.

6. A bicycle trailer according to any of the aforesaid claims, **characterized in that** the lighting device (14/28/29/35) is encased completely or partially in a soft foam or silicone material.

7. A bicycle trailer according to any of the aforesaid claims, **characterized in that** the lighting device (14/28/29/35) comprises a part containing an illuminant and, if necessary, also a power source, which can be releasably inserted into the housing of the lighting device (14/28/29/35).

8. A bicycle trailer according to any of the aforesaid claims, **characterized in that** the push handle (6) is attached to the frame via at least one coupling configured as a lockable swivel joint (5), in particular via two lockable swivel joints (5), and/or comprises at least one lockable swivel joint (5), in particular two joints (5), wherein the lighting device (14) is inserted into the swivel joint (5), in particular is connected firmly to a stationary part of the swivel joint (5).

9. A bicycle trailer according to any of the aforesaid claims, **characterized in that** the lighting device (14/28/29/35) has a recess in the housing thereof for a battery or a rechargeable battery, and/or **characterized by** power leads inside the frame configured to connect the lighting device(s) (14/28/29/35) to a power source.

10. A bicycle trailer according to any of the aforesaid claims, **characterized in that** the lighting device(s) (14/28/29/35) is/are supplied with power via conductors running on or in the profile of the push handle (6/25).

11. A bicycle trailer according to claim 10, **characterized in that** a contacting device is provided in the coupling via which the conductors running on or in the profile of the push handle (6/25) can be electrically connected to corresponding conductors in the frame, wherein the coupling is in particular a plug-in coupling for plugging the push handle (6/25) into or onto holding fixtures at the frame.

12. A bicycle trailer according to any of the aforesaid claims, **characterized in that** the push handle has a lockable swivel joint in each of the two free arms thereof respectively, or the coupling for attaching the push handle to the frame is configured as a swivel joint, and that the lighting device is integrated into the swivel joint.

13. A bicycle trailer according to any of the aforesaid claims, **characterized in that** the lighting device emits different colored light to the front and to the rear according to the direction of travel.

14. A bicycle trailer according to any of the aforesaid claims, **characterized by** a generator connected to the lighting device (14/28/29/35) and/or by a rechargeable battery, which can be charged in particular by solar cells arranged on the bicycle trailer, the push handle (6/25) or the lighting device (14/28/29/35).

15. A bicycle trailer according to any of the aforesaid claims, **characterized by** an activation device wirelessly connected to the lighting device (14/28/29/35) for controlling the operation of the lighting device (14/28/29/35).

## Revendications

1. Remorque de bicyclette, notamment destinée au transport d'enfants, comprenant un châssis (1/23) et un bâti relié à celui-ci pour une cellule de passager, laquelle possède au moins deux roues (2/21) et laquelle peut être pourvue d'un timon (3/22) servant à l'attelage à une bicyclette et d'au moins une troisième roue en vue d'une utilisation de la remorque de bicyclette en tant que voiture d'enfant ou poussette, laquelle possède un dispositif d'éclairage (14/35) et est pourvue d'une poignée coulissante (6/25), **caractérisée en ce que** l'au moins un dispositif d'éclairage (14/28/29/35) est intégré dans la poignée coulissante (6/25) ou dans un accouplement servant à fixer la poignée coulissante (6/25) au bâti.

2. Remorque de bicyclette selon la revendication 1, **caractérisée en ce que** la poignée coulissante (25) est réalisée sous la forme d'un arceau sensiblement en forme de U et
- au moins un dispositif d'éclairage (35) se trouve sur sa partie de l'arceau qui relie les deux branches libres et qui s'étend transversalement par rapport au sens du déplacement, et/ou
- au moins un dispositif d'éclairage (28/29) se trouve sur chaque branche libre de l'arceau, trouve sur chaque branche libre de l'arceau, et/ou
- un dispositif d'éclairage ou respectivement un dispositif d'éclairage s'étire autour des coins arrière de l'arceau.

3. Remorque de bicyclette selon la revendication 2, **caractérisée en ce que** le boîtier du dispositif d'éclairage (29) entoure la poignée coulissante (25) et/ou le dispositif d'éclairage (28/29) fait au moins partiellement saillie au-dessus de la section transversale du profil de la poignée coulissante (25).

4. Remorque de bicyclette selon l'une des revendications 2 ou 3, **caractérisée en ce qu'**une partie du boîtier du dispositif d'éclairage (28/29/35) est inséré dans une ou plusieurs cavités dans le profil de la poignée coulissante (25) .

5. Remorque de bicyclette selon l'une des revendications 2 à 4, **caractérisée en ce que** le dispositif d'éclairage (28/29/35) présente une longueur minimale de 10 cm, de préférence supérieure à 15 cm.

6. Remorque de bicyclette selon l'une des revendications précédentes, **caractérisée en ce que** le dispositif d'éclairage (14/28/29/35) est partiellement ou entièrement enrobé d'un matériau à base de mousse souple ou de silicone.

7. Remorque de bicyclette selon l'une des revendications précédentes, **caractérisée en ce que** le dispositif d'éclairage (14/28/29/35) possède une partie, qui contient le moyen lumineux et éventuellement aussi une source de courant, laquelle peut être insérée de manière amovible dans le boîtier du dispositif d'éclairage (14/28/29/35).

8. Remorque de bicyclette selon l'une des revendications précédentes, **caractérisée en ce que** la poignée coulissante (6) est fixée au bâti par le biais d'au moins un accouplement réalisé sous la forme d'une articulation tournante (5) blocable, notamment par le biais de deux articulations tournantes (5) blocables, et/ou possède au moins une articulation tournante (5) blocable, notamment deux articulations tournantes (5), et **en ce que** le dispositif d'éclairage (14) est inséré dans l'articulation tournante (5) en étant notamment relié à demeure avec une partie fixe de l'articulation tournante (5).

9. Remorque de bicyclette selon l'une des revendications précédentes, **caractérisée en ce que** le dispositif d'éclairage (14/28/29/35) possède à l'intérieur de son boîtier un logement pour une pile ou une batterie, et/ou **caractérisée par** des passages de courant à l'intérieur du bâti destinés à relier le ou les dispositifs d'éclairage (14/28/29/35) à une source de courant.

10. Remorque de bicyclette selon l'une des revendications précédentes, **caractérisée en ce que** le ou les dispositifs d'éclairage (14/28/29/35) sont alimentés en énergie par le biais d'un conducteur électrique qui s'étend dans le profilé de la poignée coulissante (6/25).

11. Remorque de bicyclette selon la revendication 10, **caractérisée en ce que** l'accouplement contient un dispositif de mise en contact par le biais duquel les conducteurs électriques qui s'étendent sur ou dans le profilé de la poignée coulissante (6/25) peuvent être reliés électriquement à des conducteurs électriques correspondants dans le bâti, l'accouplement étant notamment un accouplement à enfichage destiné à enficher ou à emmancher la poignée coulissante (6/25) dans ou sur des logements sur le bâti.

12. Remorque de bicyclette selon l'une des revendications précédentes, **caractérisée en ce que** la poignée coulissante possède respectivement une articulation tournante blocable dans ses deux branches libres ou l'accouplement destiné à la fixation de la poignée coulissante au bâti est réalisé sous la forme d'une articulation tournante, et **en ce que** le dispositif d'éclairage est intégré dans l'articulation tournante.

13. Remorque de bicyclette selon l'une des revendications précédentes, **caractérisée en ce que** le dispositif d'éclairage (14/28/29) délivre de la lumière dans des couleurs différentes vers l'avant et vers l'arrière dans le sens du déplacement.

14. Remorque de bicyclette selon l'une des revendications précédentes, **caractérisée par** un générateur relié au dispositif d'éclairage (14/28/29/35) et/ou par une batterie qui peut notamment être chargée par des cellules solaires disposées sur la bicyclette, la poignée coulissante (6/25) ou le dispositif d'éclairage (14/28/29/35).

15. Remorque de bicyclette selon l'une des revendications précédentes, **caractérisée par** un dispositif d'actionnement relié sans fil au dispositif d'éclairage (14/28/29/35) et servant à la commande du fonctionnement du dispositif d'éclairage (14/28/29/35).
